# EUROPEAN PATENT APPLICATION

(11) **EP 2 141 593 A1**
(43) Date of publication of application: **06.01.2010**
(21) Application number: 08159487.1
(22) Date of filing: 02.07.2008
(51) Int. Cl.: G06F 9/46, G06F 9/50

(54) **Requirement dependent allocation of hardware units to applications**

(71) Applicant: Telefonaktiebolaget LM Ericsson (publ), 16483 Stockholm (SE)
(72) Inventor: Sahlin, Richard, 240 13, Genarp (SE)
(74) Representative: Boesen, Johnny Peder

(57) **Abstract**

Control of utilization of a plurality of hardware units (310a-d) by a software application (302,304) is described. Performance requirement data is obtained from the software application, the data being representative of at least one performance requirement of the software application. The performance requirement data is processed in conjunction with respective predefined performance specification data related to each of the hardware units and, as a result of the processing, a utilization indication signal is generated that is indicative of at least which at least one hardware unit to utilize by the software application. In dependence on the utilization indication signal, the utilization of the hardware units is controlled.

## Description

### Technical field

The present invention relates to control of resource utilization in a mobile communication terminal.

### Background

Mobile communication devices have during the last decades evolved from being more or less primitive telephones, capable of conveying only narrow band analog signals such as voice conversations, into the multimedia mobile devices of today capable of conveying large amounts of data representing any kind of media. For example, a communication device in a GSM, GPRS, EDGE, UMTS or CDMA2000 type of system is capable of recording, conveying and displaying both still images and moving images, e.g. video streams, in addition to audio data such as speech or music. Needless to say, other software applications in the form of graphics intensive games are also very common in present day communication devices.

The capability to execute in communication devices is provided to these software applications by processing circuitry in the form of processors and memory circuitry as well as associated driver software that form part of a so-called platform. That is, a platform typically comprises a number of hardware components that are used for graphics functionality.

Typically, when designing such platforms the control of how hardware components are to be used by higher level software applications is compiled into the software that forms part of the platform. That is, it is decided at the time of creating the platform that a specific function in a software application shall use a specific hardware to handle the specific functionality required by the software application. Typically, it is assumed during this platform creation that all software applications shall utilize the hardware in a way that provides maximum performance, i.e. execute as fast as possible.

However, from the point of view of software applications there may exist different requirements with regards performance. One application, e.g. a game, may require that processing of data must be carried out as fast as possible in order to give the user a good experience, for example in the form of a smooth movement of graphic objects, which requires a fast frame rate. Another application may not have the same requirements on the execution speed, be it a web browser, text editor or a screensaver. Such applications may instead require that memory use is kept as small as possible or that processing shall be carried out in an energy efficient manner.

Although resource allocation in computer environments in general is a known field, see e.g. WO 2007/096350, there is still a shortage of specific solutions in the prior art that are capable of handling the problems discussed above.

### Summary

In order to improve on prior art solutions there is provided, according to a first aspect, a method for controlling utilization of a plurality of hardware units by a software application. The method comprises obtaining performance requirement data from the software application, the data being representative of at least one performance requirement of the software application, processing the performance requirement data in conjunction with respective predefined performance specification data related to each of the hardware units, generating, as a result of the processing, a utilization indication signal that is indicative of at least which at least one hardware unit to utilize by the software application, and controlling, in dependence on the utilization indication signal, the utilization of the hardware units.

Furthermore, the obtaining of performance requirement data may comprise obtaining data that specifies performance data in terms of any one or more of execution speed, memory usage, size of the software application and electric power usage.

Embodiments of the methods include those wherein the software application is a graphics software application and wherein the obtaining performance requirement data comprises obtaining data that specifies performance data in terms of visual quality of output from the graphics application.

In other words, a method is provided that allows software applications to control the performance of a hardware platform on which the application is executed. For example, the method allows the applications to tell the platform if execution should be in a way that saves power, and thereby extend the available battery life time, maximizes execution speed, which is beneficial for computing intensive processes, or saves memory, which is beneficial in situations where the available memory space is small.

The obtaining of performance requirement data, the processing of the performance requirement data and the generation of a utilization indication signal may be performed within an application manager process, and the controlling of utilization of the hardware units may comprise controlling properties of software driver parameters utilized by the software application during accessing the hardware units. In such embodiments, the control of properties of software driver parameters may be performed in a performance control process in response to the utilization indication signal provided by the application manager process.

That is, an application manager may be present and running on the platform and receive a utilization indication signal to change the performance setting from a software application. The application manager decides, based on the information contained in such a signal provided by the applications, if the current performance setting should be changed or not.

Embodiments include those where the control of properties of software driver parameters involves controlling an application programming interface, API, to convey data between the software application and the hardware units.

In other words, if it is found that there is need for performance control, this is signaled by the application manager via platform API calls to the performance controller that is present and running on the platform.

When applications use the platform API to access functionality, the performance controller may use the performance setting to control the properties of the hardware and associated software, e.g. drivers, that are used. For example, control which software driver that is used in combination with a specific hardware unit.

Furthermore, the method may also involve receiving a status signal comprising information regarding any of at least a temperature and a battery status and, in dependence on the status signal, controlling, the utilization of the hardware units. Such embodiments provide additional ways in which hardware utilization may be optimized.

In a second aspect, there is provided an apparatus configured to control utilization of a plurality of hardware units by a software application. The apparatus comprises processing and memory circuitry configured to obtain performance requirement data from the software application, the data being representative of at least one performance requirement of the software application, process the performance requirement data in conjunction with respective predefined performance specification data related to each of the hardware units, generate, as a result of the processing, a utilization indication signal that is indicative of at least which at least one hardware unit to utilize by the software application, and control, in dependence on the utilization indication signal, the utilization of the hardware units.

The apparatus according to the second aspect may, according to a third aspect, be comprised in a mobile communication device, and a computer program according to a fourth aspect may comprise software instructions that, when executed in a computer, performs the method according to the first aspect. These further aspects provide corresponding effects and advantages as discussed above in connection with the first aspect.

### Brief description of the drawings

Embodiments will now be described with reference to the attached drawings, where:
figure 1 schematically illustrates a communication system,
figure 2 schematically illustrates a mobile communication device,
figures 3a and 3b schematically illustrate a software and hardware structure,
figure 4 is a flow chart of utilization control.

### Detailed description of embodiments

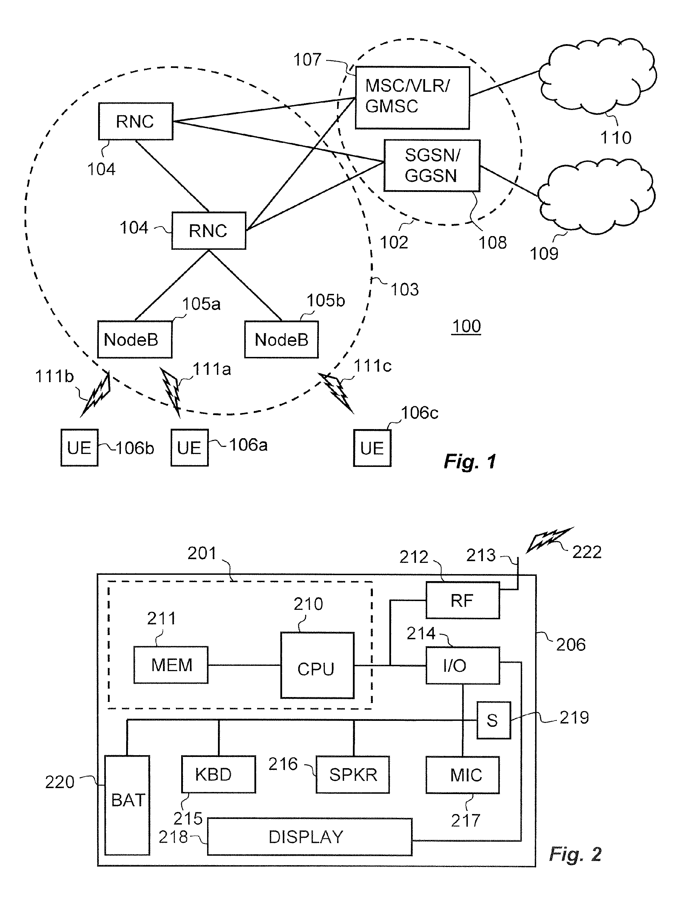

Figure 1 illustrates schematically a universal mobile telecommunications system (UMTS) network 100 comprising communicating devices in which the above summarized method, arrangement and software may be implemented. It should be noted, however, that the skilled person will readily be able to perform implementations in other similar communication systems such as GSM/GPRS systems.

In figure 1 the UMTS network 100 comprises a core network 102 and a UMTS terrestrial radio access network (UTRAN) 103. The UTRAN 103 comprises a number of radio network controllers (RNC) 104, each of which is coupled to a set of neighboring base transceiver stations (BTS) 105. BTS's are sometimes referred to as Node B's. Each Node B 105 is responsible for a given geographical cell and the controlling RNC 104 is responsible for routing user and signaling data between that Node B 105 and the core network 102. All of the RNC's 104 are coupled to one another.

Figure 1 also illustrates mobile communication devices or user equipment (UE) 106a-c connected to a respective Node B 105a-b in the UTRAN 103 via a respective air interface 111a-c. Mobile devices served by one Node B, such as devices 106a and 106b served by Node B 105a, are located in a so-called radio cell.

A combined mobile switching center (MSC) visitor location register (VLR) and gateway mobile switching center (GMSC) is illustrated with block 107. The MCS/VLR/GMSC 107 provides circuit switched services to the UE 106, via the UTRAN 103, with other circuit switched communication networks 110. A serving GPRS support node (SGSN) combined with GPRS gateway support node (GGSN) is illustrated by block 108. The SGSN/GGSN 108 provides packet switched data services to the UE 106, via the UTRAN 103, with other packet switched communication networks 109. As the skilled person realizes, the network 100 in figure 1 may comprise a large number of similar functional units in the core network 102 and the UTRAN 103, and in typical realizations of networks, the number of mobile devices may be very large.

Figure 2 illustrates schematically a mobile communication device 206, corresponding to any of the communication devices 106 in figure 1. The communication device 206, which is shown in some more detail as compared to the description of the device 106 in figure 1, comprises a processor 210, memory 211 as well as input/output units in the form of a microphone 217, a speaker 216, a display 218 and a keypad 215 connected to the processor 210 and memory 211 via an input/output interface unit 214. Radio communication via an air interface 222 is realized by radio circuitry 212 and an antenna 213. A battery 220 provides electric power to the circuitry and a temperature sensor 219 is connected such that it is capable of providing signals indicating the temperature of the circuitry and the battery.

The processor 210 makes use of software instructions stored in the memory 211 in order to control all functions of the terminal 206, including the functions to be described in detail below with regard to utilization control. In other words, at least the processor and the memory form parts of an apparatus 201 that is configured to control utilization of hardware units as summarized above and described in detail below. Together with appropriately configured control software, such an apparatus is often referred to as a "platform", as will be discussed further below. Details regarding how these units operate in order to perform normal functions within a UMTS network, such as the network 100 of figure 1, are known to the skilled person and are therefore not discussed further.

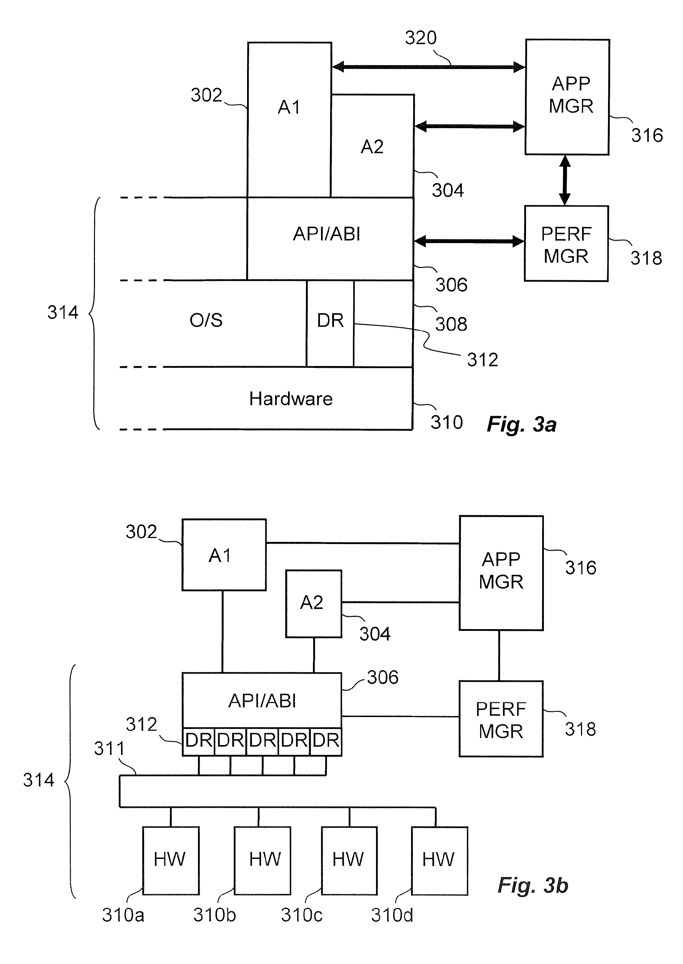

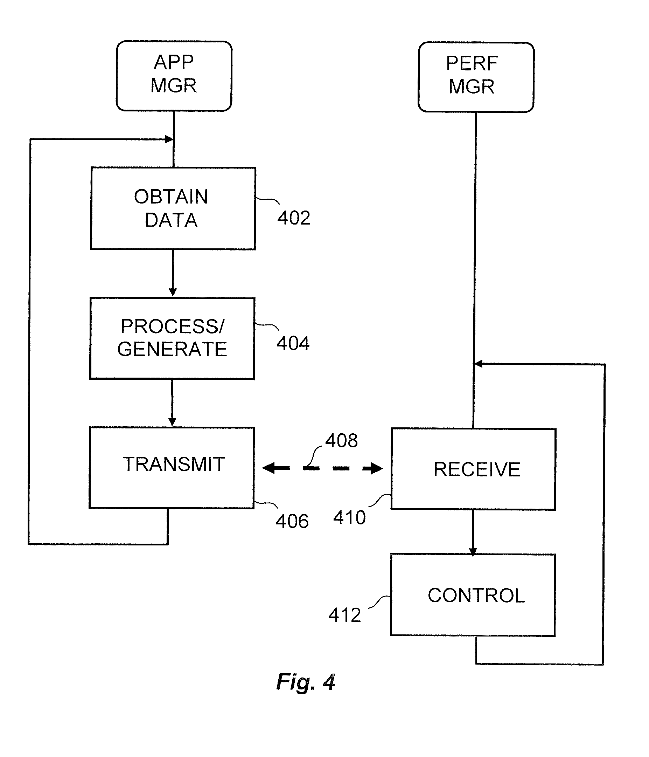

Turning now to figures 3a, 3b and 4, control of utilization of hardware units in a combined hardware and software platform will be described. The utilization control is realized in the form of software instructions residing, together with other necessary software such as an operating system, in a memory and executed by a processor in a device, such as the mobile communication device 206 of figure 2. However, the illustration of a mobile communication device is not to be interpreted as limiting. That is, realization in a mobile communication device is only one example and it is foreseen that the utilization control is useful in any device that has processing capabilities.

A first software application 302 and a second software application 304 is running on a combined hardware and software platform 314. The platform 314 comprises a hardware base 310 that comprises processing, communication and memory circuitry such as the circuitry described with reference to the apparatus 201 of figure 2. As illustrated in figure 3b, the hardware base 310 comprises a plurality of different hardware units, of which only four units 310a-d are shown in figure 3b. Operating system software 308, with inherent hardware driver software 312, interacts directly with the hardware units 310 via channels, in figure 3b simply illustrated as a connecting path 311. The hardware units 310a-d differ with respect to each other in that they are configured differently in terms of their performance. For example, one hardware unit 310a is configured such that it optimizes execution speed of the tasks that are provided to it by the platform software. Similarly, a second hardware unit 310b is configured such that it optimizes memory usage and a third hardware unit 310c is configured such that it optimizes electric power usage.

The first application 302 is a time sensitive graphic application, such as an interactive graphic game, that provides output data to a display screen such as the display 218 in the device 206 of figure 2. The second application 304 is a graphic application that is less time critical than the first application 302, but more memory consuming and more critical in terms of power usage. The applications 302,304 interact with the operating system and hardware units 310 via an implementation of an application programming interface, API, 306.

By providing software in the form of an application manager 316 and a performance manager 318, the performance requirements of the two applications 302,304 are taken care of. At least to an extent, the application manager 316 and the performance manager 318 form part of the platform 314 and they interact with the applications 302,304 by obtaining performance requirement data from the applications 302,304. This interaction is schematically illustrated by signaling arrows and exemplified by arrow 320 between the first application 302 and the application manager 316. With reference to figure 4, this performance data obtaining is performed in an obtaining step 402.

The performance requirement data that was obtained during the obtaining step 402 is then processed by the application manager 316 in a processing step 404. During the processing step 404, a utilization indication signal is generated that is indicative of at least which at least one hardware unit to utilize by the software application.

The utilization indication signal is then provided, in a transmission step 406, to the performance manager 318, which receives the signal in a reception step 410. The transfer of the utilization indication signal is indicated in figure 4 by a dashed transfer arrow 408. This is to indicate a logical distinction between the application manager 316 and the performance manager 318. In practice, the software instructions that make up the application manager 316 and the performance manager 318 may be executing in a common process or in separate processes.

Upon receiving the utilization indication signal, the performance manager 318 utilizes this information to control utilization of the hardware units, as indicated in a control step 412. That is, the performance manager selects which hardware units 310a-d and associated driver software 312 to utilize for the applications 302,304. Here, the first application is a time sensitive graphic application and as such it has provided performance requirement data to the application manager 316 that indicate that it needs one or more hardware units that are optimized in terms of execution speed. As a result, the utilization indication signal from the performance manager indicates that hardware unit 310a is to be utilized by the first software application 302.

Similarly, the second application 304 is a graphic application that is more memory consuming and more critical in terms of power usage and as such it has provided performance requirement data to the application manager 316 that indicate that it needs one or more hardware units that that are optimized in terms of utilization of memory and having low power usage. As a result, the utilization indication signal from the performance manager indicates that hardware units 310b and hardware unit 310c are to be utilized by the second software application 304.

The utilization control that is described here is a continuous process, as indicated by the "closed loop" of steps 402-406 and 410-412. This is to illustrate that performance requirements may vary over time and resulting in a corresponding variation in the control of the utilization.

Moreover, although not described in detail in the flow chart of figure 4, the performance manager may be configured such that it detects hardware circuitry status signals, e.g. status signals representing a temperature received from the temperature sensor (219 in figure 2) and battery status information from the battery (220 in figure 2). These additional signals may be used during the control step 412 to further optimize the usage of the hardware units 310.

## Claims

1. A method of controlling utilization of a plurality of hardware units (310) by a software application (302,304), comprising:
- obtaining (402) performance requirement data from said software application, the data being representative of at least one performance requirement of the software application,
- processing (404) the performance requirement data in conjunction with respective predefined performance specification data related to each of the hardware units,
- generating (404), as a result of the processing, a utilization indication signal that is indicative of at least which at least one hardware unit to utilize by the software application, and
- controlling (412), in dependence on the utilization indication signal, the utilization of the hardware units.

2. The method of claim 1, wherein the obtaining performance requirement data comprises obtaining data that specifies performance data in terms of any one or more of execution speed, memory usage, size of the software application and electric power usage.

3. The method of claim 1 or 2, wherein the software application is a graphics software application and wherein the obtaining performance requirement data comprises obtaining data that specifies performance data in terms of visual quality of output from the graphics application.

4. The method of any of claims 1 to 3, wherein the obtaining of performance requirement data, the processing of the performance requirement data and the generation of a utilization indication signal are performed within an application manager (316) process.

5. The method of any of claims 1 to 4, wherein the controlling of utilization of the hardware units comprises controlling properties of at least one software driver (312) utilized by the software application during accessing the hardware units.

6. The method of claim 5 depending on claim 4, wherein the control of properties of at least one software driver (312) is performed in a performance control (318) process in response to the utilization indication signal provided by the application manager process.

7. The method of any of claims 1 to 6, wherein the utilization control comprises controlling an application programming interface, API (306), to convey data between the software application and the hardware units.

8. The method of any of claims 1 to 7, further comprising:
- receiving a status signal comprising information regarding any of at least a temperature and a battery status, and
- controlling (412), in dependence on the status signal, the utilization of the hardware units.

9. An apparatus (201) configured to control utilization of a plurality of hardware units (310) by a software application (302,304), the apparatus comprising processing and memory circuitry (210,211) configured to:
- obtain (402) performance requirement data from said software application, the data being representative of at least one performance requirement of the software application,
- process (404) the performance requirement data in conjunction with respective predefined performance specification data related to each of the hardware units,
- generate (404), as a result of the processing, a utilization indication signal that is indicative of at least which at least one hardware unit to utilize by the software application, and
- control (412), in dependence on the utilization indication signal, the utilization of the hardware units.

10. The apparatus of claim 9, where the processing and memory circuitry is configured to obtain data that specifies performance data in terms of any one or more of execution speed, memory usage, size of the software application and electric power usage.

11. The apparatus of claim 9 or 10, wherein the software application is a graphics software application and wherein the processing and memory circuitry is configured to obtain data that specifies performance data in terms of visual quality of output from the graphics application.

12. The apparatus of any of claims 9 to 11, where the processing and memory circuitry is configured to control properties of at least one software driver (312) utilized by the software application during accessing the hardware units.

13. The apparatus of any of claims 9 to 12, where the processing and memory circuitry is configured to:
- receive a status signal comprising information regarding any of at least a temperature and a battery status, and
- control (412), in dependence on the status signal, the utilization of the hardware units.

14. A mobile communication device (206) comprising the apparatus (201) of any of claims 9 to 13.

15. A computer program comprising software instructions that, when executed in a processor (210), performs the method of any of claims 1 to 8.
